# EUROPEAN PATENT SPECIFICATION

(11) **EP 4 380 774 B1**
(45) Date of publication and mention of the grant of the patent: **25.06.2025**
(21) Application number: 22761959.0
(22) Date of filing: 02.08.2022
(51) Int. Cl.: B29C 45/72, B29C 45/26, B29C 33/00

(54) **MOULD INSERT WITH CONDUITS FOR COOLING INJECTION MOULDED ITEM**
FORMEINSATZ MIT LEITUNGEN ZUM KÜHLEN EINES SPRITZGEGOSSENEN ARTIKELS
INSERT DE MOULE COMPRENANT DES CONDUITS POUR REFROIDIR UN ARTICLE MOULÉ PAR INJECTION

(30) Priority: 02.08.2021 DK PA202170395
(43) Date of publication of application: 12.06.2024
(73) Proprietor: LEGO A/S, 7190 Billund (DK)
(72) Inventor: SKOVBJERG, Bo, 7190 Billund (DK); DIEMER, Mads, DK Billund (DK)
(74) Representative: Guardian IP Consulting I/S
(86) International application number: PCT/EP2022/071669
(87) International publication number: WO 2023/012150

(56) References cited:
- EP-A1- 3 459 703
- WO-A2-2004/048207
- JP-A- H03 256 707
- JP-A- S6 225 020
- US-A- 4 976 900
- US-A1- 2016 107 357
- US-A1- 2018 370 107
- DRUMMER DIETMAR: "LEHRSTUHL FÜR KUNSTSTOFFTECHNIK Prüf-und Probekörperwerkzeuge am Lehrstuhl für Kunststofftechnik", 9 April 2015 (2015-04-09), pages 1 - 35, XP055981789, Retrieved from the Internet <URL:https://www.lkt.tf.fau.de/files/2017/06/Probekoerperwerkzeuge.pdf> [retrieved on 20221115]
- SACHS E ET AL: "PRODUCTION OF INJECTION MOLDING TOOLING WITH CONFORMAL COOLING CHANNELS USING THE THREE DIMENSIONAL PRINTING PROCESS", POLYMER ENGINEERING AND SCIENCE, BROOKFIELD CENTER, US, vol. 40, no. 5, 1 May 2000 (2000-05-01), pages 1232 - 1247, XP000969782, ISSN: 0032-3888, DOI: 10.1002/PEN.11251
- ANONYMOUS: "PolyJet For Injection Molding", 24 February 2016 (2016-02-24), pages 1 - 19, XP055659218, Retrieved from the Internet <URL:https://www.alphacam.ch/fileadmin/user_upload/Applikationen/PDFs/Technical_Application_Guide_-_Injection_Molding_-_PolyJet_For_Injection_Molding_-_English_A4_Web.pdf> [retrieved on 20200117]

## Description

The present invention relates to a mould insert with a mould core, the mould insert being configured for inserting into a mould plate of a mould box of an injection moulding machine, and for cooperating with a second mould insert with a mould cavity. The mould insert with the mould core comprises gas conduits for leading gas under pressure from a source of pressurized gas through the mould insert and blow the gas onto a free outer surface of an injection moulded item formed on the mould core, when the mould insert with the mould core and the mould insert with the mould cavity have been parted.

### Description of related art

US 4 976 900 A discloses an injection mould comprising mould platens with a mould cavity and a mould core, a parting surface and gas outlet ports in the parting surface for blowing gas after the mould core and the mould cavity have been separated. The US patent application US 2016/0107357 A1 discloses a mould for injection moulding, the mould having an air cooling system for cooling injection moulded item after the mould halves/parts are separated from each other, following the injection moulding step. US 2016/0107357 A1 teaches air passages configured for directing an air flow towards the moulded item, after the mould parts have been separated from each other. Air can be blown onto the moulded item via four air passages and an "air providing part" formed as linear conduits having apertures directed toward the item on the mould core, the linear conduits and the apertures formed in a structure raised from a an inner surface of the core mould part and surrounding the core. In order to target all sides, of the injection moulded item, four separate conduits are needed each formed in a raised sidewall surrounding the core. In order to provide sufficient cooling of the injection moulded item, US 2016/0107357 A1 thus teaches a very complex structure of the core part and the cavity part of the mould. Further, the cooling air conduits take up a lot of space in the mould part, which prevents - or at least impedes - arrangement of other necessary or desired structures, such as vent channels, mould cooling channels, ejector pins, alignment posts, etc.

Therefore, there is at least a need for a mould or at least a mould insert for a mould box, which has a simpler structure.

It is one object of the invention to provide a mould or at least a mould insert for a mould box, which has a simpler structure, than the prior art.

### Summary of the invention

In a first aspect, the objects of the invention are achieved by a mould insert part for injection moulding, the mould insert part comprising
- a main body having a first surface and an opposed second surface, the first surface defining a plane;
- a mould core extending from the first surface of the main body of the mould insert part;
- a gas inlet port connectable to a supply of pressurized gas;
- two or more gas outlet ports arranged to direct a gas flow towards an uncovered surface of an injection moulded item located on the mould core, after the mould core and the mould cavity have been separated from each other; and
- a gas conduit system extending inside the main body of the mould insert part, and connecting the two or more gas outlet ports with the gas inlet port, common to the two or more gas outlet ports,

wherein each of the two or more gas outlet ports are arranged at least partially through the first surface, and
wherein the gas conduit system is provided in below said first surface.

In an embodiment, at least two of the two or more gas outlet ports are arranged on opposite sides of the mould core.

In a further embodiment, at least one gas conduit of the gas conduit system has a bend of 90° or more.

In a further embodiment, at least one gas conduit at least partially extends under the mould core of the mould insert part.

In a further embodiment, the two or more gas outlet ports are configured to direct gas towards a centreline of the mould core.

In a further embodiment, each of the two or more gas outlet ports are configured to direct the gas in an angle relative to a plane defined by the first surface, where the angle is larger than 0° and smaller than 90°.

All the gas outlet ports may have the same angle relative to the plane. In other embodiments, each gas outlet port may be formed at angles relative to the plane, which are different from the other gas outlet ports.

In some embodiment, the angle of each gas outlet port is configured to blow gas onto a desired area of the free outer surface of the injection moulded item, and predetermined dependent on the shape of the injection moulded item.

In any of the previously mentioned embodiment, or any other embodiment mentioned in this application, the mould insert part may be formed in an additive manufacturing process.

When mould plates/mould insert parts are formed in steal - as is conventional -it is very difficult to form anything other than linear channels. When the mould insert part according to the invention is formed in an additive manufacturing process, such as 3D printing, and in a polymer material, e.g. a plastic, it is relatively easy to produce a mould insert part with complexly shaped gas conduits.

Further, the objects of the invention may be achieved in a second aspect, by a combination of a mould box for an injection moulding machine and a mould insert part as defined in claim 8.

Further, the objects of the invention may be achieved in a third aspect, by an injection moulding machine as defined in claim 9 comprising a combination according to claim 8.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1 schematically shows an outline of a prior art injection moulding machine;
Fig. 2, in a see-through elevated perspective view, shows a mould insert part with a mould core, and according to the invention, from one angle;
Fig. 3 shows mould insert part of Fig. 2 from a different angle;
Fig. 4 shows the mould insert part of Fig. 2 in a side view;
Fig. 5 shows the mould insert part of Fig. 2 in a top view, and indicating sections A-A and B-B through the mould insert part, the sections shown in Fig. 7;
Fig. 6 shows the mould insert part of Fig. 2 in another side view than Fig. 4;
Fig. 7 shows cross sections A-A and B-B through the mould insert part of Fig. 5;
Fig. 8 show cross section A-A of Fig. 5 with an injection moulded item located on the mould core;
Fig. 9A, in an elevated perspective view, shows a mould insert part of another embodiment of the invention;
Fig. 9B shows the mould insert part insert part of Fig. 9A in a see-through view from one angle;
Fig. 9C shows the mould insert part insert part of Fig. 9A in a see-through view from another angle than in Fig. 9B;
Fig 10A, in a top view, shows another mould insert part with a mould cavity and a vent conduit, and indicating a section A-A through the mould insert;
Fig. 10B shows section A-A through the mould insert part with a mould cavity of Fig. 10A;
Fig. 10C shows an enlarged view of detail B in Fig. 10B.

### Detailed description of the embodiments

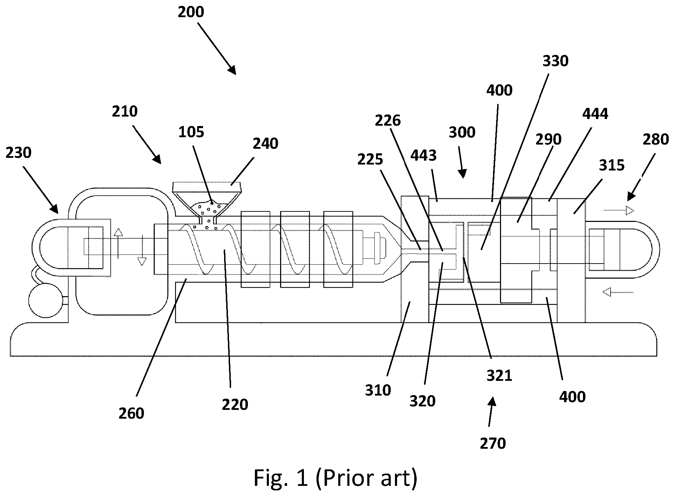

Fig. 1 illustrates schematically an injection moulding machine 200 as known in the art. The injection moulding machine 200 generally comprises an injection unit 210, shown in the left side of the figure, and a clamping unit 270, shown in the right side of the figure. The injection unit 210 handles injection of plastic material into a mould formed in the clamping unit 270 of the injection moulding machine 200. The injection unit 210 and the clamping unit 270 of the injection moulding machine 200 are attachable to a mount 201.

Injection moulding machines 200 generally works in the following way: Plastic granules 105 are fed into the barrel 260 of a reciprocating screw 220 of the injection unit 210 via a hopper 240. The reciprocating screw 220 is driven by a drive mechanism 230, such as an electrical motor. The plastic granules 105 fed through the hopper 240 are then transported towards the clamping unit 270 by the reciprocal screw, while being compacted and they are heated by heating devices 250 surrounding the reciprocating screw 220, until they melt and reach a suitable viscosity at a nozzle 225 at the entrance to the clamping unit 270 with the mould. The mould is formed in a mould box 300.

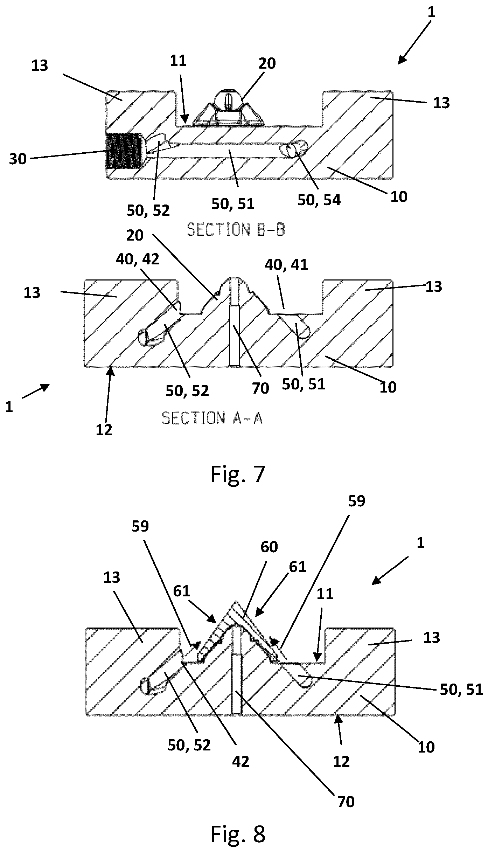

The fluid plastic material is fed from the nozzle 225 through sprue channels 226 in a base plate 310 of the mould box 300, and reaches a mould cavity 321 formed in a first mould plate 320 of the mould box 300. The first mould plate 320 of the mould box 300 is connected to the base plate 310. The base plate 310 is connected to the mount 201. A second mould plate 330 which may comprise a mould core and/or further portions of a mould cavity is arranged moveably relative to the first mould plate 320, such that the mould box may be completely closed (clamped together) to allow injection of the melted plastic, and such that the mould box 300 may be opened to extract a moulded item 60 (see Fig. 7).

In Fig. 1, the second mould plate 330 is attached to a moveable platen 290. The moveable platen 290 - and thereby the second mould plate 330 - is slideably arranged on a set of cylindrical main guide rail pillars 400. Typically, the clamping unit 270 of injection moulding machines 200 comprises four cylindrical main guide rail pillars 400 for guiding the movement of the moveable platen 290 with the second mould plate 330. The movement of the moveable platen 290 with the second mould plate 330 is performed by a linear drive mechanism 280, typically a hydraulic mechanism.

Each of the main guide rail pillars 400 of the main guide rail system of the mould box 300 of the clamping unit 270 has an elongate body, which is cylindrical, and has a first end 443 and a second end 444. The first end 443 is fixed to the base plate 310, which is fixed to a frame (not shown) of the clamping unit 270. The frame of the clamping unit 270 may form part of the frame 201 of the injection moulding machine 200, or may be fixed thereto.

The opposite end, the second end 444, of the elongate body of each main guide rail pillars 400 is fixedly connected to a second end structure 315 of the clamping unit 270. The second end structure 315 of the clamping unit 270 is fixed to the mount 201 of the clamping unit 270.

The second end structure 315 may also, as shown in Fig. 1, form a mount for the linear drive mechanism 280.

Now, returning to the moveable platen 290 with the second mould plate 330, this moveable platen 290 comprises through-going bearings e.g. slide bearings or ball bearings, slidably receiving the cylindrical main guide rail pillars 400.

In an injection process, the linear drive mechanism 280 clamps the first mould plate 320 and the second mould plate 330 together, whereupon plastic is injected by the reciprocal screw 220 through the nozzle 225 and into the mould cavity 321. When the plastic has filled the mould cavity 321 completely, and has cooled sufficiently for the plastic to be in solid state, then the linear drive mechanism 280 moves the second mould plate 330 away from the first mould plate 320, and the moulded item 60 is ejected from the mould. The ejection of the moulded item 60 is typically done by ejector pins (not shown) formed in/through the base plate 310.

After the injection of plastic into the mould and when the mould plates 320, 330 have been separated from each other it is often desirable to further cool the injection moulded item 60 further before removing the injected moulded item 60 from the mould.

It is known in the art to cool the injection moulded item 60 by blowing a gas such as air onto the injection moulded item 60 when it is still located on a mould core 20 of one of the mould plates 320, 330 after the mould plates have been separated.

Often the mould including the mould core and the corresponding mould cavity are arranged on mould insert. Mould inserts a generally plate shaped structures which are attachable to the mould plates 320, 330 by inserting them there into. Thereby, it is obtained that the often very heavy mould plates do not need to be replaced every time a new type of item is to be injection moulded. Instead only the mould inserts are exchanged.

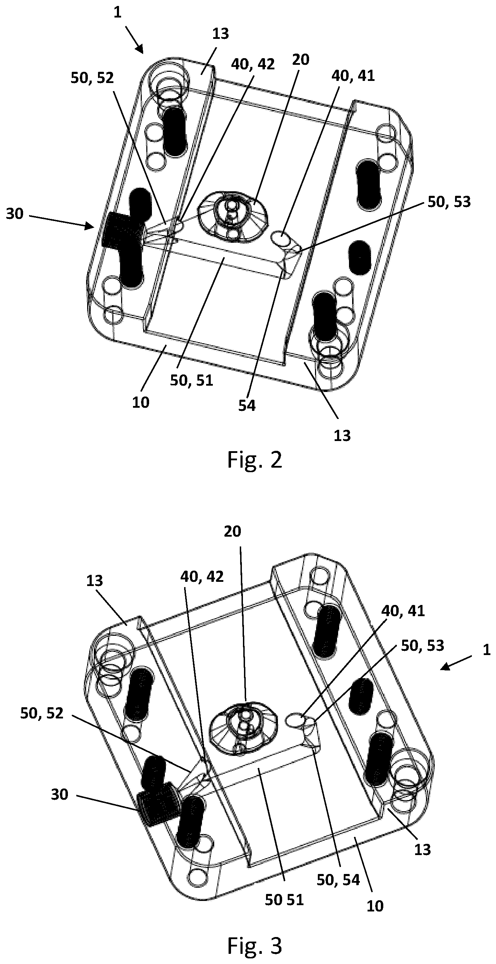

In one aspect, the present invention relates to such a mould insert part 1. The mould insert part 1 is described in connection with figures 2-8 below. It will be appreciated that the mould insert part 1 described may be used in a mould box 300 as outlined above, in connection with Fig. 1 above. It will further be appreciated that such a mould bow may be implemented in an injection moulding machine 200 as outlined above, in connection with Fig. 1 above.

It will also be appreciated, that although the features for cooling an injection moulded item 60 is described in connection with a mould insert part 1 in the embodiments show in figures 2-8, the same features may in principle be implemented in mould plates as such, i.e. in mould boxes not havening replaceable mould inserts.

Now turning to Figs. 2-8, fig. 2 and 3 are see-through elevated perspective views, of an embodiment of the mould insert part 1 according to the invention. Fig 2 shows the mould insert from one angle. Fig. 3 shows the mould insert from a different angle.

The mould insert part 1 comprises a main body 10, which is a generally plate shaped structure having a first surface 11, and, opposed thereto, a second surface 12.

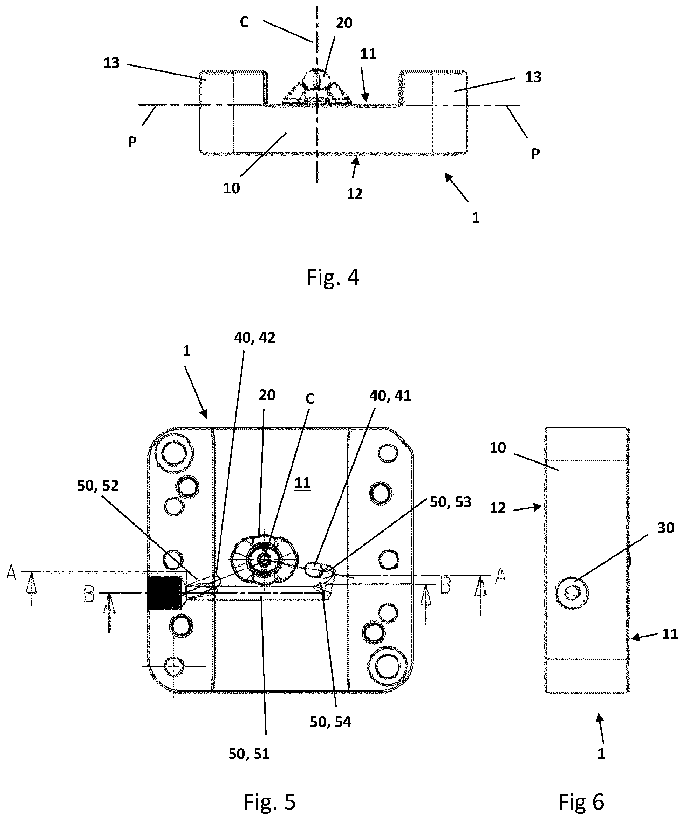

The first surface 11 defines a plane P, see Fig. 4. Fig. 4 shows the mould insert part 1 of Fig. 2 in a side view, where also the first surface 11 and the opposite second surface 12 is visible. The first surface 11 faces a second mould insert part with a mould cavity, when both are inserted in/attached to mould plates of a mould box, e.g. as described above.

The mould insert part 1 comprises a mould core 20 extending outwardly from said first surface 11 of the main body 10. This means that the mould core 20 extends above the plane P.

The mould insert part 1 is configured for cooperating with a second mould insert part (not shown) having a mould cavity, which is configured for - together with the mould insert part 1 with the mould core 20 - forming a mould for injection moulding an injection moulded item 60.

The mould insert part 1 is insertable into a mould plate of a mould box, e.g. as exemplified above. The second mould insert part with the mould cavity likewise is insertable into another mould plate of a mould box, e.g. as exemplified above.

The main body 10 of the mould insert part 1 may - as shown - be rectangular or quadratic in shape.

The main body 10 of the mould insert part 1 - at least in the shown embodiment - further comprises side flanges 13. The side flanges 13 are optional. The side flanges 13 extend above the first surface 11 of the main body 10 of the mould insert part 1. This means that the side flanges 13 extend above the plane P. The side flanges 13 are configured for cooperating with recesses (not shown) on the cooperating second mould insert part (not shown). In the embodiment shown in the Figures 2-8 there are two side flanges 13.

The mould insert part 1 further comprises a gas inlet port 30. The gas inlet port 30 is connectable to a supply of pressurized gas (not shown).

The pressurized gas may be air. The air may be pressurized by a pump (not shown). Alternatively, the supply of pressurized gas may be a replaceable pressurized container (not shown).

The supply of pressurized gas may form part of an injection moulding machine 200, e.g. as described above.

The supply of pressurized gas may be connected to the gas inlet port 30 by suitable connection tubing configured for conducting pressurized gas and/or conduits formed in the mould plate(s) or other parts of the injection moulding machine 200.

The gas inlet port 30 is connected to gas outlet ports 40 via a gas conduit system 50.

It will be appreciated that a mould insert part 1 according to the invention may comprise more than the gas outlet ports 41, 42 shown in Figs.2-8, such as 3-20 gas outlet ports 40.

Each of the two or more gas outlet ports 41, 42 are arranged at least partially through the first surface 11.

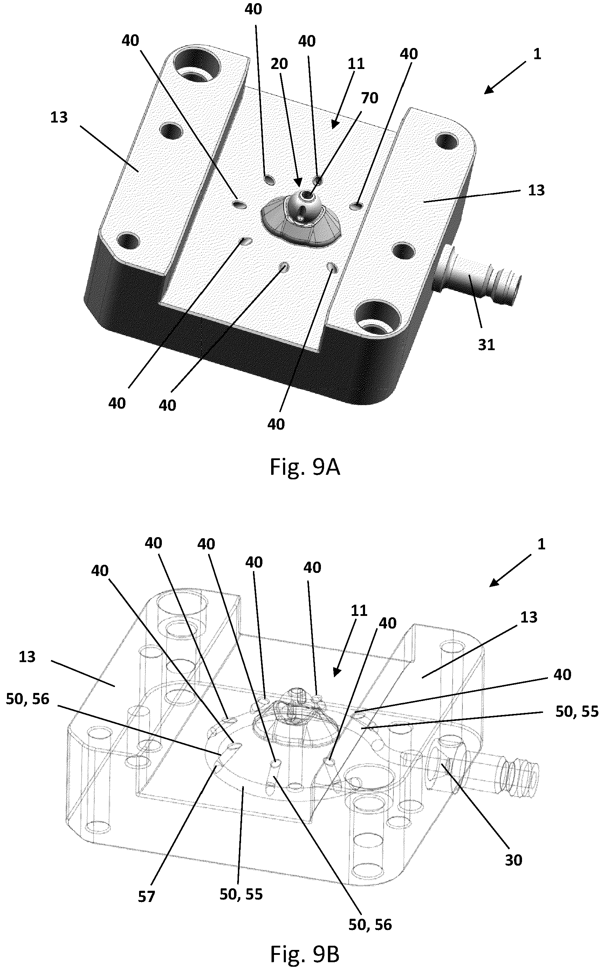

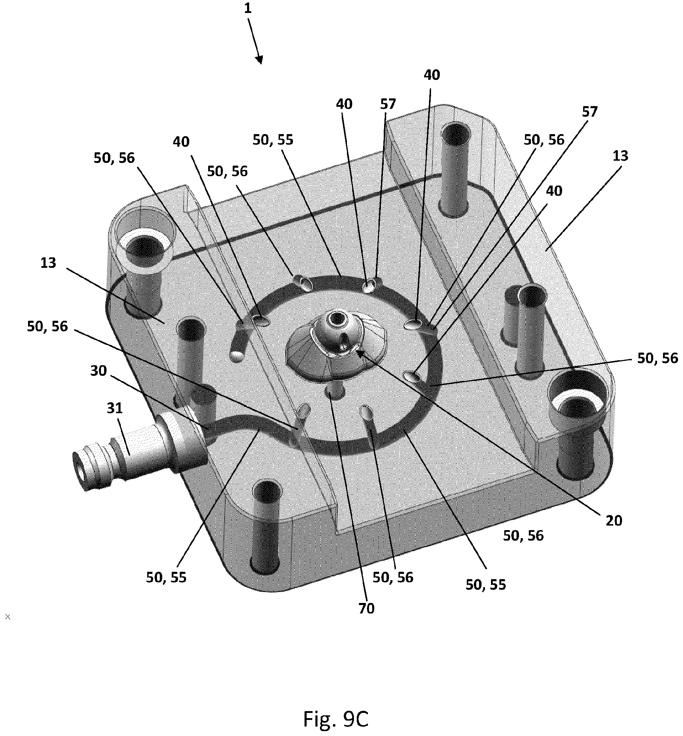

In the Figs. 1-8 embodiment, a first gas outlet port 41 is arranged fully in and through first surface 11 of the main body 10, and a second gas outlet port 42 is arranged in an intersection between the first surface 11 of the main body 10, and one of the side flanges 13. In the embodiment, shown in Figs. 9A-C, all of the total of seven outlet ports 40 are arranged fully in and through first surface 11 of the main body 10. Thus, all of the gas outlet ports 40 in the Fig. 9A-C embodiment are of the type designated with the reference number 41 in the Fig. 2-8 embodiment.

In any case, the gas outlet ports 40, 41, 42 are arranged to direct a gas flow from the gas inlet port 30 (when the gas inlet port 30 is connected to the source of pressurized gas) and through the gas conduit system 50, towards an uncovered surface of an injection moulded item 60 located on the mould core 20 in situations where the mould core 20 and the mould cavity have been separated from each other.

By uncovered surface in the context is meant that, when after the mould halves/plates have been moved away from each other, and the injection moulded item 60 rests on the mould core 20, some of the surfaces of the injection moulded item 60 are not covered by the opposite mould part any more, and are accessible. Other surfaces of the injection moulded item 60 will be in contact with the mould core 20 or the first surface 11 of main body 10 of mould insert part 1, and these are covered.

Fig. 8, showing a section, section A-A, of Fig. 5, illustrates a situation, where the mould insert parts have been spaced apart after an item 60 has been injection moulded in the mould formed by the mould insert part 1 with the mould core 20 and the other - not shown - mould insert part with the mould cavity. In Fig. 8 the injection moulded item 60 is located on the mould core 20. The arrows 59 indicate a flow/stream of gas - for example atmospheric air being blown onto the free outer surfaces 61 of the injection moulded item 60. By free surfaces is meant surfaces of the item 60 which are not facing the mould core 20 or the first surface 11 of the main body10 of the mould insert part 1, i.e. the surfaces of the item 60, which has been exposed after the other mould insert part with the mould cavity has been moved away from the insert mould part 1 (with the mould core 20).

The gas conduit system 50 extends inside the main body 10 of the mould insert part 1, and connects the two or more gas outlet ports 40 with the gas inlet port 30.

Thus, the gas inlet port 30 is common to the two or more gas outlet ports.

In the embodiment, shown in Figs. 2-8, the gas conduit system 50 comprises a first conduit 51 extending from the gas inlet port 30 to the first gas outlet port 41. The gas conduit system 50 further comprises a second conduit 52 extending from the gas inlet port 30 to the second gas outlet port 40. As shown, the first and second conduits 51, 52 branches of from each other in close vicinity of the gas inlet port 30. In other not shown embodiments, the gas conduit system 50 may comprise intermediate conduit sections and/or branching off of conduits at other locations.

As shown in Fig. 9B-C, in other embodiments, the gas conduit system 50 may comprises a common gas conduit 55, extending from the gas inlet port 30, and which branches into sub-conduits 56, which sub-conduits 56 connect to the gas outlet ports 40. In, the embodiment, shown in Figs. 9A-C there are seven such sub-conduits 56.

In either case, as shown, the gas conduit system 50 is provided in below said first surface 11. This means that the gas conduit system 50 is provided below the plane P.

As shown, the gas inlet port 30 may also be provided below said first surface 11. This means that the gas inlet port 30 is provided below the plane P.

In the embodiments shown in Figs. 2-8 and in Figs. 9A-C respectively, the gas inlet port 30 is provided in and through a side wall of the main body 10 of the mould insertion part 1. In other, not shown embodiments the gas inlet port 30 may be provided in/through the second surface 12.

In the embodiment shown in Figs. 2-8, the two gas outlet ports 41, 42 are arranged on opposite sides of the mould core 20. In the embodiment shown in Figs. 9A-C, the seven gas outlet ports 40 completely surrounds/encircles the mould core 20. More generally, in embodiments where the mould insertion part 1 comprises more than two gas outlet ports 40, at least two of the two or more gas outlet ports 40 are arranged on opposite sides of the mould core 20.

As mentioned above, the mould insert part 1 may - in not shown embodiments comprise more than the two gas outlet ports 41, 42 shown in Figs. 2-8, such as 3-20 gas outlet ports 40. Preferably, the plurality of gas outlet ports 40 surrounds the mould core 20. In some embodiments the plurality of gas outlet ports 40 are equidistantly spaced apart. In further embodiments the plurality of gas outlet ports 40 are formed in a circle surrounding the mould core 20, as exemplified in the Fig. 9A-C embodiment. Alternatively, the plurality of gas outlet ports 40 may be formed at positions in the first surface 11, dependent on a shape of the item 60 to be injection moulded, such that surfaces of the item 60 that are in particular need of cooling may be reached by the cooling gas from the outlet ports 40.

In embodiments, such as the Fig. 9A-C embodiment, where there are more than two gas outlet ports 40, all of the gas outlet ports 40 may be of the type designated with the reference number 41 in the Fig. 2-8 embodiment, i.e. where a first gas outlet port 41 is arranged fully in and through first surface 11 of the main body 10.

However, in other - not shown embodiments, where there are more than two gas outlet ports 40, some or all of the gas outlet ports 40 may be of the type designated with the reference number 42 in connection with the Fig. 2-8 embodiment, i.e. where a second gas outlet ports 42 is arranged in an intersection between the first surface 11 of the main body 10, and one of the side flanges 13

As the plurality of gas outlet ports 40 are connected to one common gas inlet 30, preferably provided at a side wall of the main body 10 of the mould insert part 1, and the since the plurality of gas outlet ports 40 are arranged to surround the mould core 20, at least some of the conduits of the gas conduit system 50 needs to stretch first in one direction, and then in the opposite direction. In one embodiment, a gas conduit 51 of the gas conduit system 50 comprises a bend 53, of 90° or more. In further embodiments, a gas conduit 51 of the gas conduit system 50 comprises a bend 53, of 180° formed in the first conduit 51. In the embodiment shown in Figs. 1-8, a bend 53 of 90° is visible in Fig, 5. The bend 53 is formed at least in a plane parallel to the plane P defined by the first surface 11. As also shown in Fig. 5, a second bend 54 is also formed in the first conduit 51, which is less than, but very close to 90°.

As is also visible in Fig. 5 some gas conduits 50, in Fig. 5 the first gas conduit 51 is formed such that it at least partially extends under the mould core 20 of the mould insert part 1. As shown in the section A-A in Fig 7, the mould insert part 1 may further comprise an injection channel 70 for injecting molten plastic into the mould. The injection channel 70 is arranged centrally through the mould core 20. In other - not shown embodiments - and depending also on the shape and size of the item 60 to be injection moulded, an injection channel 70 may be arranged at other positions relative to the mould core, and in some cases, there may be more than one injection channel 70 (not shown). The gas conduits of the gas conduit system 50 necessarily must avoid such structures such as the injection channel 70 and for example passageways for ejector pins and the like. However, it has been realized that some gas conduits 50 may extend very close to and even under the core to save space in the mould insert part 1.

As illustrated in Fig. 4, the mould core 20 may comprise a centreline C.

In some embodiments, two or more gas outlet ports 40, 41, 42 are further configured to direct gas towards the centreline C of the core 20. As shown in Fig. 5 this is the case with the Figs. 2-8 embodiment. It is also the case in the Fig. 9A-C embodiment.

Now referring again to Fig. 8, the two gas outlet ports 41, 42 are configured to direct the gas in an angle relative to a plane P defined by the first surface 11. As shown this angle may be an obtuse angle. In general, the angle is larger than 0° and smaller than 90°.

The angle of each gas outlet port 40 is preferably configured to blow gas onto a desired area of the free outer surface 61 of the injection moulded item, and predetermined dependent on the shape of the injection moulded item 60.

All of the gas outlet ports 40 may have the same angle relative to the plane P. In other embodiments, each gas outlet port 40 may be formed at angles relative to the plane, which are different from the other gas outlet ports 40.

As also mentioned above, the mould insert part 1 in the embodiment shown in Figs. 9A-C generally has the same features as the mould insert part 1 in the embodiment shown in Figs. 2-8, the difference being the arrangement of the gas conduit system 50 and the gas outlet ports 40. The same reference numbers are used for like parts.

In the embodiment shown in Figs 9A-C, the gas inlet port 30 shown with a connection stud 31. It will be appreciated that also the embodiment of Figs. 2-8 may be equipped with such a connection stud.

The connection stud may be a separate part assembled to the mould insert part or it may be formed integral therewith.

In the embodiment shown in Figs 9A-C seven gas outlet ports 40 are arranged in and through the first surface 11 of the main body 10 of mould insert part 1. The gas outlet ports 40 are arranged to encircle (surround) the mould core 20. The gas outlet ports 40 are connected to the gas inlet 30 via a main gas conduit 55, which branches of into sub-conduits 56, each of which connect a gas outlet port 40 with the main gas conduit 55. Where the sub-conduits 56 branches of from the main gas conduit 55 a bend 57 between the main gas conduit 55 and the sub-conduit 56 is provided, which is 90° (seen perpendicular to the plane P).

In any of the above described embodiment, at least the mould insert part 1 may be formed in an additive manufacturing process. In further embodiments thereof, both the mould insert parts, or even the mould plates of a mould box may be formed in an additive manufacturing process.

In mould plates/mould inserts formed in steal - as is conventional - it is very difficult to form anything other than linear channels. When instead the mould insert part 1 according to the invention is formed in an additive manufacturing process, such as 3D printing, and in a polymer material, e.g. a plastic, it is easier to shape complexly shaped gas conduits.

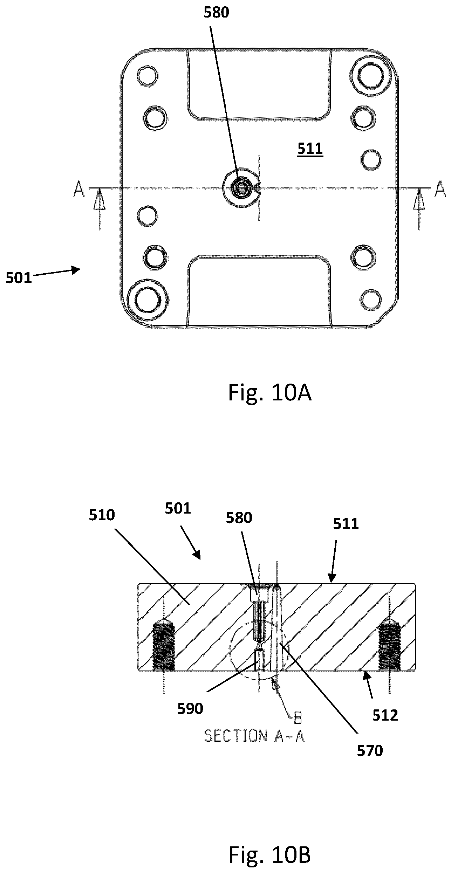

Turning now to Figs. 10A-C, these figures illustrates a mould insert part 501 having means for venting the mould during the injection moulding process. As also described above, the mould insert parts or even the mould plates of mould boxes may be formed in a in an additive manufacturing process, such as 3D printing, and in a polymer material, e.g. a plastic.

In such cases, when the mould plates/mould insert parts are clamped together for injecting the molten plastic into the mould, it has shown that the polymer material makes the mould plates/mould insert parts more air tight, than is the case with mould plates/mould insert parts formed in e.g. steel. This increases the need for venting the mould. Before injecting the molten plastic into the mould (mould cavity), the mould is filled with atmospheric air. When the molten plastic enters the mold cavity, this air must efficiently be vented from the mould cavity in order to make space for the molten plastic, and to ensure even distribution of molten plastic and to prevent air bubbles in the finished injection molten item 60.

A mould insert part according to a fourth aspect of the invention alleviates or eliminates these problems.

Fig. 10A shows a mould insertion part 501 according to the fourth aspect.

The mould insertion part 501 in Fig. 10A is illustrated as a mould insertion part 501 with a mould cavity 580. The mould cavity 580 shown is as such unrelated to the mould core 20 shown in connection with Figs. 2-9. However, the mould insert part 501 is configured for cooperating with a mould insertion part with a mould core (not shown), where the mould core is configured to cooperate with the mould cavity to form an injection moulded item (not shown). In Fig. 10A, the mould cavity 580 has an elongate cylindrical shape configured to form an elongate cylindrical item.

The mould insert part 501 comprises a main body 510, which is a generally plate shaped structure having a first surface 511, and, opposed thereto, a second surface 512.

The first surface 511 defines a plane P2. The first surface 511 is configured for facing a second mould insert part with a mould core (not shown), when both are inserted in/attached to mould plates of a mould box, e.g. as described above.

The mould insert part 501 comprises a mould core cavity 580 extending inwardly from said first surface 511 of the main body 510. This means that the mould core 20 extends below the plane P2.

The mould insert part 501 is configured for cooperating with a second mould insert part (not shown) having a mould core, which is configured for - together with the mould insert part 501 with the mould cavity 580 - forming a mould for injection moulding an injection moulded item (not shown).

The mould insert part 501 is insertable into a mould plate of a mould box, e.g. as exemplified above. The second mould insert part with the mould core likewise is insertable into another mould plate of a mould box, e.g. as exemplified above.

The main body 510 of the mould insert part 501 may - as shown - be rectangular or quadratic in shape.

The mould insert part 501 may be configured to cooperate with a mould insert part 1 (having a mould core 20) as described above, but where the mould core and the mold cavity of the respective mould insert parts are adapted to cooperate. In other embodiment the mould insert part 501 may be configured for cooperating with a more conventional type of mould insert part with a core.

Fig. 10B shows a section A-A through the mould insert part 501 as indicated in Fig. 10A. The side sectional view in Fig. 10B reveals that the mould insert part 501 comprises an injection channel 570 for injecting molten plastic into the mould. The injection channel 570 is arranged centrally through the mould insert part 501 and may interface with further channels/runners of cavity portions in the cooperating mould insert part to fill the mould cavity 580.

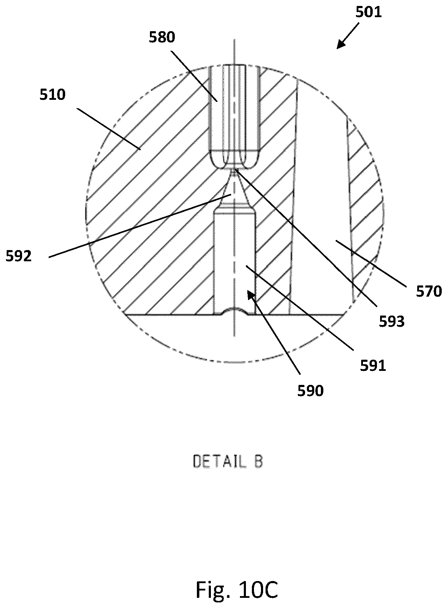

Fig. 10C shows the detail B indicated by circle in Fig.10B. In Fig. 10B it is shown that a venting conduit 590 is formed extending from an extreme end of the mould cavity 580.

The venting conduit 590 forms an air vents configured for allowing air to escape from the mould cavity 580 as the mould cavity 580 is filled with melted material.

In steel mould plates/mould insert parts, it is very difficult to form other than linear channels. The mould insert part 501 according to the invention is 3D printed in plastic. Thereby, it is easier to shape complexly formed air vents 590.

In the shown example, the venting conduit 590 has a generally cylindrical main portion 591. Where the venting conduit main portion 591 approaches the mould cavity 580, a conical potion 592 of the venting conduit 590 is provided such that a restriction hole 593 is provided between the mould cavity 580 and the venting conduit 590.

The restriction hole is so small that it prevents molten plastic to exit the mould cavity 580, while still allowing the air otherwise trapped in the mould cavity 580 to escape.

It is to be noted that the figures and the above description have shown the example embodiments in a simple and schematic manner. Many of the specific mechanical details have not been shown since the person skilled in the art should be familiar with these details and they would just unnecessarily complicate this description. For example, the specific materials used and the specific injection moulding procedure have not been described in detail since it is maintained that the person skilled in the art would be able to find suitable materials and suitable processes to manufacture the container according to the current invention.

### Parts list

- 1: mould insert part
- 10: main body of mould insert part
- 11: first surface of main body of mould insert part
- 12: second surface of main body of mould insert part
- 13: side flanges
- 20: mould core
- 30: gas inlet port
- 40: gas outlet port
- 41: (first) gas outlet port/first type gas outlet port
- 42: (second) gas outlet port second type gas outlet port
- 50: gas conduit system
- 51: gas conduit
- 52: gas conduit
- 53: bend in a gas conduit
- 54: bend in a gas conduit
- 55: gas conduit
- 56: sub-conduits/sub gas conduits
- 59: gas flow, arrow indicating a gas flow
- 60: injection moulded item
- 61: uncovered/free outer surfaces of the injection moulded item
- 70: injection channel for injecting molten plastic into the mould
- 105: plastic granules
- 200: injection moulding machine
- 201: mount for the injection moulding machine
- 210: injection unit of the injection moulding machine
- 220: reciprocating screw of the injection unit
- 225: nozzle
- 226: sprue channels
- 230: drive mechanism of the injection moulding machine
- 240: hopper
- 250: heating devices
- 260: barrel of the injection unit of the injection moulding machine
- 270: clamping unit 270 of the injection moulding machine
- 280: linear drive mechanism
- 290: moveable platen
- 300: mould box
- 310: base plate of the mould box
- 315: second end structure
- 320: first mould plate
- 321: mould cavity
- 330: second mould plate
- 400: main guide rail pillar
- 443: first end of main guide rail pillar
- 444: second end of main guide rail pillar
- 501: mould insert part
- 510: main body of the mould insert part
- 511: first surface of the main body of the mould insert part
- 512: second surface of the main body of the mould insert part
- 570: injection channel for injecting molten plastic into the mould
- 580: mould cavity
- 590: venting conduit
- 591: main portion of the injection channel
- 592: conical potion of the injection channel
- 593: restriction hole of the injection channel
- C: centreline
- P: plane defined by first surface of main body of mould insert part

## Claims

1. A mould insert part (1) for injection moulding, comprising
- a main body (10) having a first surface (11) and an opposed second surface (12), the first surface defining a plane (P)
- a mould core (20) extending from the first surface (11) of the main body (10) of the mould insert part (1);
- a gas inlet port (30) connectable to a supply of pressurized gas;
- two or more gas outlet ports (40) arranged to direct a gas flow towards an uncovered surface (61) of an injection moulded item (60) located on the mould core (20), after the mould core (20) and the mould cavity have been separated from each other; and
- a gas conduit system (50) extending inside the main body (10) of the mould insert part (1), and connecting the two or more gas outlet ports (40) with the gas inlet port (30), common to the two or more gas outlet ports (40),
wherein each of the two or more gas outlet ports (40) are arranged at least partially through the first surface (11), and
wherein the gas conduit system (50) is provided in the main body (10) below said first surface (11).

2. A mould insert part (1) according to claim 1, wherein at least two of the two or more gas outlet ports are arranged on opposite sides of the mould core (20).

3. A mould insert part (1) according to claim 1 or 2, wherein at least one gas conduit (51) of the gas conduit system (50) has a bend (53, 57) of 90° or more.

4. A mould insert part (1) according to any one of the claims 1-3, wherein at least one gas conduit (51) at least partially extends under the mould core (20) of the mould insert part (1).

5. A mould insert part (1) according to any one of the claims 1-4, wherein the two or more gas outlet ports (40, 41, 42) are further configured to direct gas towards a centreline (C) of the mould core (20).

6. A mould insert part (1) according to any one of the claims 1-5, wherein each of the two or more gas outlet ports (40, 41, 42) are configured to direct the gas in an angle relative to the plane (P) defined by the first surface (11), and where the angle is larger than 0° and smaller than 90°.

7. A mould insert part (1) according to any one of the claims 1-6, wherein the mould insert part (1) is formed in an additive manufacturing process.

8. A combination of a mould box for an injection moulding machine and a mould insert part (1) according to any one of the claim 1-7, the mould box comprising
- a first mould part; and
- a second mould part,
wherein the mould insert part (1) is insertable into one of the first or second mould part, and where a second mould insert having a mould cavity corresponding to the mould core (20) in order to form an injection moulded item (60) is insertable into the other one of the first or second mould part to form a mould.

9. An injection moulding machine comprising a combination according to claim 8.

## Patentansprüche

1. Formeinsatzteil (1) für Spritzguss, umfassend
- einen Hauptkörper (10), der eine erste Fläche (11) und eine gegenüberliegende zweite Fläche (12) aufweist, wobei die erste Fläche eine Ebene (P) definiert,
- einen Formkern (20), der sich von der ersten Fläche (11) des Hauptkörpers (10) des Formeinsatzteils (1) erstreckt;
- einen Gaseinlassanschluss (30), der mit einer Druckgaszufuhr verbunden werden kann;
- zwei oder mehr Gasauslassanschlüsse (40), die so angeordnet sind, dass sie einen Gasstrom zu einer unbedeckten Fläche (61) eines Spritzgussartikels (60), der sich auf dem Formkern (20) befindet, hin lenken, nachdem der Formkern (20) und der Formhohlraum voneinander getrennt wurden; und
- ein Gasleitungssystem (50), das sich innerhalb des Hauptkörpers (10) des Formeinsatzteils (1) erstreckt und die zwei oder die mehreren Gasauslassanschlüsse (40) mit dem Gaseinlassanschluss (30), der den zwei oder den mehreren Gasauslassanschlüssen (40) gemeinsam ist, verbindet,
wobei jeder der zwei oder der mehreren Gasauslassanschlüsse (40) mindestens teilweise durch die erste Fläche (11) hindurch angeordnet ist, und
wobei das Gasleitungssystem (50) im Hauptkörper (10) unterhalb der ersten Fläche (11) bereitgestellt ist.

2. Formeinsatzteil (1) nach Anspruch 1, wobei mindestens zwei der zwei oder der mehreren Gasauslassanschlüsse auf gegenüberliegenden Seiten des Formkerns (20) angeordnet sind.

3. Formeinsatzteil (1) nach Anspruch 1 oder 2, wobei mindestens eine Gasleitung (51) des Gasleitungssystems (50) eine Biegung (53, 57) von 90° oder mehr aufweist.

4. Formeinsatzteil (1) nach einem der Ansprüche 1-3, wobei sich mindestens eine Gasleitung (51) mindestens teilweise unter dem Formkern (20) des Formeinsatzteils (1) erstreckt.

5. Formeinsatzteil (1) nach einem der Ansprüche 1-4, wobei die zwei oder die mehreren Gasauslassanschlüsse (40, 41, 42) weiter so konfiguriert sind, dass sie Gas zu einer Mittellinie (C) des Formkerns (20) hin lenken.

6. Formeinsatzteil (1) nach einem der Ansprüche 1-5, wobei jeder der zwei oder der mehreren Gasauslassanschlüsse (40, 41, 42) so konfiguriert ist, dass er das Gas in einem Winkel relativ zu der durch die erste Fläche (11) definierten Ebene (P) lenkt, und wobei der Winkel größer als 0° und kleiner als 90° ist.

7. Formeinsatzteil (1) nach einem der Ansprüche 1-6, wobei das Formeinsatzteil (1) in einem additiven Fertigungsprozess gebildet wird.

8. Kombination aus einem Formkasten für eine Spritzgussmaschine und einem Formeinsatzteil (1) nach einem der Ansprüche 1-7, wobei der Formkasten umfasst
- ein erstes Formteil; und
- ein zweites Formteil,
wobei das Formeinsatzteil (1) in eines des ersten oder des zweiten Formteils eingesetzt werden kann, und wobei ein zweiter Formeinsatz, der einen dem Formkern (20) entsprechenden Formhohlraum aufweist, um einen Spritzgussartikel (60) zu bilden, in das andere des ersten oder des zweiten Formteils einsetzbar ist, um eine Form zu bilden.

9. Spritzgussmaschine, die eine Kombination nach Anspruch 8 umfasst.

## Revendications

1. Partie insert de moule (1) pour moulage par injection, comprenant
- un corps principal (10) présentant une première surface (11) et une seconde surface opposée (12), la première surface définissant un plan (P)
- un noyau de moule (20) s'étendant à partir de la première surface (11) du corps principal (10) de la partie insert de moule (1) ;
- un orifice d'entrée de gaz (30) pouvant être connecté à une alimentation en gaz sous pression ;
- deux orifices de sortie de gaz (40) ou plus agencés pour diriger un flux de gaz vers une surface découverte (61) d'un article moulé par injection (60) situé sur le noyau de moule (20), après que le noyau de moule (20) et la cavité de moule ont été séparés l'un de l'autre ; et
- un système de conduites de gaz (50) s'étendant à l'intérieur du corps principal (10) de la partie insert de moule (1), et connectant les deux orifices de sortie de gaz (40) ou plus à l'orifice d'entrée de gaz (30), commun aux deux orifices de sortie de gaz (40) ou plus,
dans laquelle chacun des deux orifices de sortie de gaz (40) ou plus est agencé au moins partiellement à travers la première surface (11), et
dans laquelle le système de conduites de gaz (50) est disposé dans le corps principal (10) sous ladite première surface (11).

2. Partie insert de moule (1) selon la revendication 1, dans laquelle au moins deux des deux orifices de sortie de gaz ou plus sont agencés sur des côtés opposés du noyau de moule (20).

3. Partie insert de moule (1) selon la revendication 1 ou 2, dans laquelle au moins une conduite de gaz (51) du système de conduites de gaz (50) présente un coude (53, 57) supérieur ou égal à 90°.

4. Partie insert de moule (1) selon l'une quelconque des revendications 1-3, dans laquelle au moins une conduite de gaz (51) s'étend au moins partiellement sous le noyau de moule (20) de la partie insert de moule (1).

5. Partie insert de moule (1) selon l'une quelconque des revendications 1-4, dans laquelle les deux orifices de sortie de gaz (40, 41, 42) ou plus sont en outre configurés pour diriger du gaz vers une ligne médiane (C) du noyau de moule (20).

6. Partie insert de moule (1) selon l'une quelconque des revendications 1-5, dans laquelle chacun des deux orifices de sortie de gaz (40, 41, 42) ou plus est configuré pour diriger le gaz selon un angle par rapport au plan (P) défini par la première surface (11), et l'angle étant supérieur à 0° et inférieur à 90°.

7. Partie insert de moule (1) selon l'une quelconque des revendications 1-6, dans laquelle la partie insert de moule (1) est formée au cours d'un processus de fabrication additive.

8. Combinaison d'une boîte de moulage pour une machine de moulage par injection et d'une partie insert de moule (1) selon l'une quelconque des revendications 1-7, la boîte de moulage comprenant
- une première partie de moule ; et
- une seconde partie de moule,
dans laquelle la partie insert de moule (1) peut être insérée dans l'une des première ou seconde parties de moule, et dans laquelle un second insert de moule présentant une cavité de moule correspondant au noyau de moule (20) afin de former un article moulé par injection (60) peut être inséré dans l'autre des première ou seconde parties de moule pour former un moule.

9. Machine de moulage par injection comprenant une combinaison selon la revendication 8.
